# EUROPÄISCHE PATENTSCHRIFT

(11) **EP 1 881 713 B1**
(45) Veröffentlichungstag und Bekanntmachung des Hinweises auf die Patenterteilung: **30.08.2017**
(21) Anmeldenummer: 07012765.9
(22) Anmeldetag: 29.06.2007
(51) Int. Cl.: H04L 12/58, H04W 4/12, H04W 88/18

(54) **Übertragung von Nachrichten in einem Telekommunikationsnetz**
Transmission of messages in a telecommunications network
Transmission d'informations dans un réseau de télécommunication

(30) Priorität: 21.07.2006 DE 102006034294
(43) Veröffentlichungstag der Anmeldung: 23.01.2008
(73) Patentinhaber: Vodafone Holding GmbH, 40213 Düsseldorf (DE)
(72) Erfinder: Timphus, Frank, 40233 Düsseldorf (DE); Gaida, Jürgen, 40227 Düsseldorf (DE); De Bodic, Gwenael, Montreal H4A2H3 Quebec (CA)
(74) Vertreter: Weisbrodt, Bernd

(56) Entgegenhaltungen:
- WO-A-2004/080094
- WO-A-2005/107211
- US-A1- 2005 226 174

## Beschreibung

Die vorliegende Erfindung betrifft Verfahren zur Übertragung von Nachrichten in einem Telekommunikationsnetz, wobei eine Hüllinformationen und Inhaltsinformationen aufweisende Nachricht von einem in dem Telekommunikationsnetz betreibbaren Endgerät über das Telekommunikationsnetz an wenigstens einen über das Telekommunikationsnetz erreichbaren Nachrichtenempfänger übertragen wird.

Verfahren und Systeme zur Übertragung von Nachrichten in einem Telekommunikationsnetz, insbesondere einem Mobilfunknetz, sind im Stand der Technik in zahlreichen Ausgestaltungen bekannt, beispielsweise aus der US 2003/0100320 A1 oder der 3GPP 23.040 beziehungsweise 23.140.

Nachteilig bei den bisher bekannten Verfahren zur Übertragung von Nachrichten in einem Telekommunikationsnetz ist insbesondere bei netzübergreifenden Nachrichtenübertragungen von einem Telekommunikationsnetz in ein anderes die mitunter nicht gegebene Kompatibilität des Formats einer Nachricht, welche insbesondere dazu führt, dass eine Nachrichtenübertragung nicht beziehungsweise fehlerhaft und damit unbrauchbar erfolgt. Seitens des Nachrichtensenders, vorliegend also einem in einem Telekommunikationsnetz betreibbaren Endgerät, ist dabei bisher vor einer Nachrichtenübertragung nicht feststellbar, ob der Nachrichtenempfänger das jeweilige Nachrichtenformat nutzen kann.

Bei einer Nachrichtenübertragung von einem Nachrichtensender an mehrere Nachrichtenempfänger werden Ressourcen des Telekommunikationsnetzes aufgrund der durch Übertragung der Nachricht vom Nachrichtensender an jeden einzelnen Nachrichtenempfänger mehrfach zu übertragenden Nachricht entsprechend mehrfach belastet, insbesondere aufgrund der mitunter recht umfangreichen Inhaltsinformationen einer Nachricht.

Nutzerseitig ist aufgrund der bisher gegebenen umfangreichen unterschiedlichen Nachrichtenformate die Nutzung derselben aufgrund der mitunter unterschiedlichen Handhabungen umständlich und aufwändig, insbesondere für ungeübte und/oder hilfsbedürftige Nutzer von in Telekommunikationsnetzen betreibbaren Endgeräten.

Der Erfindung liegt in Anbetracht dieses Standes der Technik die Aufgabe zugrunde, die Übertragung von Nachrichten in einem Telekommunikationsnetz unter Meidung der beschriebenen Nachteile zu verbessern, insbesondere hinsichtlich der Auslastung des Telekommunikationsnetzes und der Nutzbarkeit der Nachrichtenübertragung.

Zur technischen Lösung wird mit der vorliegenden Erfindung ein Verfahren zur Übertragung von Nachrichten in einem Telekommunikationsnetz, wobei eine Hüllinformationen und Inhaltsinformationen aufweisende Nachricht von einem in dem Telekommunikationsnetz betreibbaren Endgerät über das Telekommunikationsnetz an wenigstens einen über das Telekommunikationsnetz erreichbaren Nachrichtenempfänger übertragen wird, vorgeschlagen, welches durch die folgenden Verfahrensschritte gekennzeichnet ist:
a) Empfang der Hüllinformationen der Nachricht in einer Nachrichtenvermittlungseinrichtung des Telekommunikationsnetzes,
b) Bestimmung wenigstens einer Adressierungsinformation des wenigstens einen Nachrichtenempfängers seitens der Nachrichtenvermittlungseinrichtung des Telekommunikationsnetzes anhand der empfangenen Hüllinformationen der Nachricht,
c) Einholen einer Adressierungsinformation eines Speicherbereichs einer Speicherverwaltungseinrichtung des Telekommunikationsnetzes von der Nachrichtenvermittlungseinrichtung des Mobilfunknetzes seitens der Speicherverwaltungseinrichtung des Telekommunikationsnetzes,
d) Mitteilen der eingeholten Adressierungsinformation des Speicherbereichs der Speicherverwaltungseinrichtung des Telekommunikationsnetzes von der Nachrichtenvermittlungseinrichtung des Telekommunikationsnetzes an das Endgerät und
e) Senden der Hüllinformationen der Nachricht von der Nachrichtenvermittlungseinrichtung des Telekommunikationsnetzes.

Vorteilhafterweise werden in Verfahrensschritt e) die Hüllinformationen an die Speicherverwaltungseinrichtung des Telekommunikationsnetzes gesendet.

Eine weitere Ausgestaltung der Erfindung sieht vor, dass in Verfahrensschritt e) die Hüllinformationen an den Nachrichtenempfänger gesendet werden.

Eine weitere vorteilhafte Ausgestaltung der Erfindung ist gekennzeichnet durch wenigstens eine Überprüfung einer Berechtigung des Senders der Nachricht zur Nutzung eines Dienstes des Telekommunikationsnetzes zur Übertragung der Nachricht. Vorteilhafterweise erfolgt eine entsprechende Überprüfung der Berechtigung des Nachrichtensenders zur Nutzung eines Nachrichtendienstes des Telekommunikationsnetzes zur Übertragung der Nachricht vor dem Senden der Nachricht, vorzugsweise vor dem Senden der Hüllinformationen der Nachricht an den Nachrichtenempfänger oder das Telekommunikationsnetz, insbesondere an die Speicherverwaltungseinrichtung des Telekommunikationsnetzes. In einer besonders bevorzugten Ausgestaltung der Erfindung erfolgt die Überprüfung seitens und/oder unter Nutzung einer Einrichtung zur Autorisierung (Autorisation), Authentifzierung (Authentication) und/oder Abrechnung (Accounting) von Diensten des Telekommunikationsnetzes, beispielsweise mittels eines sogenannten AAA-Servers des Telekommunikationsnetzes. Die Einrichtung prüft dabei für die erfindungsgemäß in dem Telekommunikationsnetz zu übertragenden Nachrichten die Autorisierung, Authentifizierung und Abrechnung derselben in dem Telekommunikationsnetz.

Zur technischen Lösung der eingangs genannten Aufgabe wird mit der vorliegenden Erfindung ferner ein Verfahren zur Übertragung von Nachrichten in einem Telekommunikationsnetz, wobei eine Hüllinformationen und Inhaltsinformationen aufweisende Nachricht von einem in dem Telekommunikationsnetz betreibbaren Endgerät über das Telekommunikationsnetz an wenigstens einen über das Telekommunikationsnetz erreichbaren Nachrichtenempfänger übertragen wird, vorgeschlagen, welches durch die folgenden Verfahrensschritte gekennzeichnet ist:
a) Aufspalten der Nachricht in die Hüllinformationen und die Inhaltsinformationen,
b) Senden der Hüllinformationen der Nachricht,
c) Empfang einer Adressierungsinformation eines Speicherbereichs einer Speicherverwaltungseinrichtung des Telekommunikationsnetzes und
d) Senden der Inhaltsinformationen der Nachricht unter Nutzung der Adressierungsinformation des von der Nachrichtenvermittlungseinrichtung des Speicherbereichs der Speicherverwaltungseinrichtung des Telekommunikationsnetzes an die Speicherverwaltungseinrichtung des Telekommunikationsnetzes.

Zur technischen Lösung der eingangs genannten Aufgabe sieht die vorliegende Erfindung ferner ein Verfahren zur Übertragung von Nachrichten in einem Telekommunikationsnetz, wobei eine Hüllinformationen und Inhaltsinformationen aufweisende Nachricht von einem in dem Telekommunikationsnetz betreibbaren Endgerät über das Telekommunikationsnetz an wenigstens einen über das Telekommunikationsnetz erreichbaren Nachrichtenempfänger übertragen wird, vor, welches durch die folgenden Verfahrensschritte gekennzeichnet ist:
a) Empfang einer Anfrage nach einer Adressierungsinformation eines Speicherbereichs zum Speichern von Inhaltsinformationen der Nachricht,
b) Bestimmen einer Adressierungsinformation eines Speicherbereichs zum Speichern von Inhaltsinformationen der Nachricht,
c) Senden der Adressierungsinformation an den Anfragenden,
d) Empfangen der Inhaltsinformationen der Nachricht zur Speicherung in dem Speicherbereich und
e) Senden einer den vollständigen Empfang der Inhaltsinformationen der Nachricht anzeigenden Indikationsnachricht an eine Nachrichtenvermittlungseinrichtung.

Eine weitere vorteilhafte Ausgestaltung des erfindungsgemäßen Verfahrens ist gekennzeichnet durch die folgenden zusätzlichen Verfahrensschritte:
f) Empfangen von Hüllinformationen der Nachricht,
g) Kombinieren der Hüllinformationen der Nachricht mit den Inhaltsinformationen der Nachricht und
h) Senden der kombinierten Informationen der Nachricht an den Nachrichtenempfänger.

Eine weitere vorteilhafte Ausgestaltung des erfindungsgemäßen Verfahrens ist gekennzeichnet durch die folgenden zusätzlichen Verfahrensschritte:
f oder i) Empfangen einer Inhaltsinformationsanforderungsnachricht und
g oder j) Senden der Inhaltsinformationen der Nachricht an den Nachrichtenempfänger.

In einer weiteren vorteilhaften Ausgestaltung der Erfindung teilt die Speicherverwaltungseinrichtung des Telekommunikationsnetzes der Nachrichtenvermittlungseinrichtung des Telekommunikationsnetzes den Erhalt der Inhaltsinformationen der Nachricht von dem Endgerät mit und wird das Verfahren erst mit und/oder nach Erhalt dieser Mitteilung fortgeführt. Erfindungsgemäß kann so sichergestellt werden, dass das Verfahren erst dann ordnungsgemäß fortgesetzt wird, wenn die Inhaltsinformationen seitens der Speicherverwaltungseinrichtung eingegangen sind. So können fehlerhafte Übertragungen von Nachrichten damit unnötige Ausnutzungen von Ressourcen des Telekommunikationsnetzes weiter vermieden werden.

Vorteilhafterweise ist der wenigstens eine Nachrichtenempfänger ein in dem Telekommunikationsnetz betreibbares Endgerät.

Eine weitere vorteilhafte Ausgestaltung der Erfindung sieht die Nutzung von Nachrichten dialogorientierter Nachrichtendienste vor. Als dialogorientierte Nachrichtendienste wird besonders bevorzugt sogenanntes conversational messaging vorgesehen, vorzugsweise in Form von sogenannten Messaging Sessions oder Chat. Dabei können Anwender Nachrichten nahezu in Echtzeit austauschen. Eine besonders bevorzugte Ausgestaltung der Erfindung sieht die Nutzung von sogenanntem Instant Messaging als dialogorientierten Nachrichtendienst (conversational messaging) als Dienst vor.

Eine weitere vorteilhafte Ausgestaltung der Erfindung ist gekennzeichnet durch die Nutzung von Nachrichten verzögerter Nachrichtendienste. Eine bevorzugte Ausgestaltung sieht als verzögerte Nachrichtendienste sogenanntes deferred messaging, wobei sogenannte store and forward Dienste, besonders bevorzugt SMS (SMS: Short Messaging Service) und/oder MMS (MMS: Multimedia Messaging Service), zum Einsatz kommen.

In einer weiteren bevorzugten Ausgestaltung der Erfindung ist das Telekommunikationsnetz ein Mobilfunknetz und das Endgerät ein in dem Mobilfunknetz betreibbares mobiles Endgerät.

Vorteilhafterweise ist die Adressierungsinformation des Nachrichtenempfängers eine Mobilfunkrufnummer, vorzugsweise die MSISDN (MSISDN: Mobile Subscriber ISDN Number; ISDN: Integrated Services Digital Network), und/oder eine Internetadresse, vorzugsweise ein einheitlicher Ortsangeber für Ressourcen, eine sogenannte URL (URL: Uniform Ressource Locator).

Eine weitere bevorzugte Ausgestaltung der Erfindung sieht vor, dass das erfindungsgemäße Verfahren in einem Mobilfunknetz gemäß dem GSM- und/oder dem UMTS-Funknetzstandard (GSM: Global System for Mobile Communications; UMTS: Universal Mobile Telecommunications System) ausgeführt wird.

Gegenstand der vorliegenden Erfindung ist ferner ein Mobilfunksystem mit ein zellulares Mobilfunknetz ausbildenden Einrichtungen und darin betreibbaren mobilen Endgeräten, welches dadurch gekennzeichnet ist, dass die das Mobilfunknetz ausbildenden Einrichtungen und die darin betreibbaren mobilen Endgeräte zur Ausführung eines erfindungsgemäßen Verfahrens ausgebildet sind.

Die erfindungsgemäßen Verfahren und Einrichtungen machen sich die Erkenntnis zunutze, dass durch erfindungsgemäße Separierung, Übertragung und Nutzung der Hüllinformationen und der Inhaltsinformationen der Nachricht eine effizientere Nutzung der Ressourcen des Telekommunikationsnetzes ermöglichbar sind. Erfindungsgemäß können so zunächst die Hüllinformationen einer Nachricht übertragen werden. Eine erfindungsgemäße Übertragung der Inhaltsinformationen der Nachricht erfolgt vorteilhafterweise dann, wenn die Hüllinformationen der Nachricht für die Übertragung seitens des Telekommunikationsnetzes beziehungsweise seitens des Nachrichtenempfängers akzeptiert sind. Eine bevorzugte Ausgestaltung der Erfindung sieht vor, dass die Übertragung der Inhaltsinformationen dabei vorteilhafterweise im Hintergrund erfolgt. Eine Übertragung der Inhaltsinformation im Hintergrund kann erfindungsgemäß so auch zu einem späteren Zeitpunkt erfolgen, beispielsweise in Fällen, in denen eine Datenübertragung nicht verfügbar ist.

Eine bevorzugte Ausgestaltung der Erfindung sieht zumindest zur Übertragung der Inhaltsinformationen einer Nachricht auf MSRP, HTTP, FTP oder dergleichen Protokolle vor.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer schematischen Prinzipdarstellung ein Ausführungsbeispiel einer erfindungsgemäßen Nachrichtenübertragung in einem Mobilfunknetz und
- Fig. 2: in einer schematischen Prinzipdarstellung ein weiteres Ausführungsbeispiel einer erfindungsgemäßen Nachrichtenübertragung in einem Mobilfunknetz.

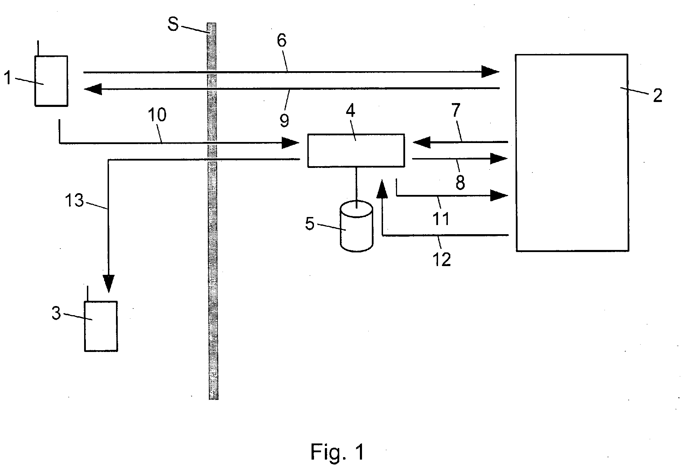

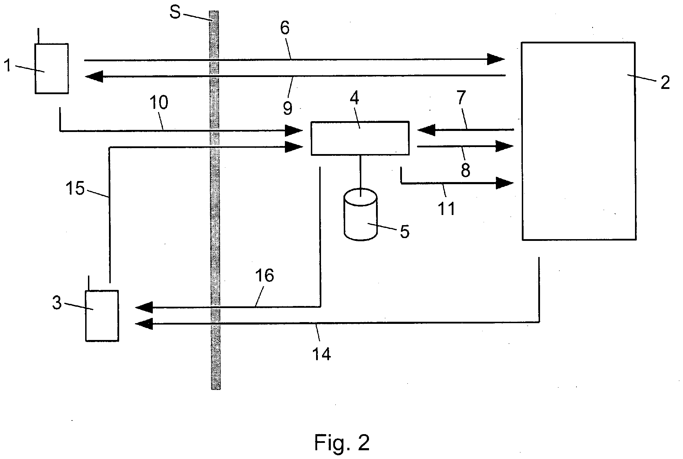

Fig. 1 und Fig. 2 zeigen in einem Mobilfunknetz, vorliegend einem Mobilfunknetz gemäß dem GSM- und/oder UMTS-Funknetzstandard, betreibbare mobile Endgeräte 1 und 3, vorliegend in Form von Mobilfunktelefonen. Die sogenannte Luftschnittstelle des Mobilfunknetzes ist in Fig. 1 und Fig. 2 symbolisch durch den grauen mit dem Bezugszeichen S gekennzeichneten Balken dargestellt. Seitens des Mobilfunknetzes sind vorliegend - symbolisch dargestellt - eine Nachrichtenvermittlungseinrichtung (message broker) 2 und eine Speicherverwaltungseinrichtung (storage manager) 4 eingerichtet. Die Speicherverwaltungseinrichtung (storage manager) 4 ist dabei mit einer Speichereinrichtung 5, vorliegend einer Datenbank verbunden.

Vorliegend will das mobile Endgerät 1 eine Hüllinformationen (envelope) und Inhaltsinformationen (body; payload) aufweisende Nachricht (message) über das Mobilfunknetz an das mobile Endgerät 3 übertragen.

Zunächst wird seitens des mobilen Endgerätes 1 die zu übertragende Nachricht (message) in die Hüllinformationen (envelope) und die Inhaltsinformationen (body; payload) aufgespalten. Die Hüllinformationen (envelope) der Nachricht (message) werden dann von dem mobilen Endgerät 1 über das Mobilfunknetz an die Nachrichtenvermittlungseinrichtung (message broker) 2 des Mobilfunknetzes gesendet. Das Senden der Hüllinformationen (envelope) der Nachricht (message) ist in Fig. 1 und Fig. 2 durch den mit dem Bezugszeichen 6 versehenen Pfeil dargestellt.

Seitens der Nachrichtenvermittlungseinrichtung (message broker) 2 werden aus den empfangenden Hüllinformationen (envelope) der Nachricht (message) des mobilen Endgerätes 1 neben wenigstens einer Adressierungsinformation des Nachrichtenempfängers, vorliegend des mobilen Endgerätes 3, sowie in weitergehenden Informationen der zu übertragenden Nachricht, insbesondere der Größe der Inhaltsinformationen (body; payload) sowie des Nachrichtentyps, extrahiert. Anschließend wird seitens der Nachrichtenvermittlungseinrichtung (message broker) 2 überprüft, ob der Sender der Nachricht, vorliegend also das mobile Endgerät 1, zur Nutzung des zur Übertragung vorgesehenen Nachrichtendienstes des Mobilfunknetzes berechtigt ist.

Im Falle einer fehlenden Berechtigung, erhält der Sender der zu übertragenden Nachricht, vorliegend also das mobile Endgerät 1, eine entsprechende Nachricht, dass dieser nicht zur Nutzung des Nachrichtenübertragungsdienstes des Mobilfunknetzes berechtigt ist. Eine entsprechende Benachrichtigung ist in den Fig. 1 und 2 nicht explizit dargestellt.

Ergänzend kann seitens der Nachrichtenvermittlungseinrichtung (message broker) 2 unter Nutzung der Adressierungsinformation des Nachrichtenempfängers, vorliegend des mobilen Endgerätes 3, überprüft werden, ob der Nachrichtenempfänger, also das mobile Endgerät 3 beziehungsweise der Nutzers des mobilen Endgerätes 3, zum Empfang von Nachrichten mittels des Nachrichtenübertragungsdienstes des Mobilfunknetzes berechtigt beziehungsweise freigeschaltet ist. Sollte der Nachrichtenempfänger, vorliegend also das mobile Endgerät 3, nicht zur Nutzung beziehungsweise zum Empfang von Nachrichten mittels des Nachrichtendienstes des Mobilfunknetzes berechtigt beziehungsweise freigeschaltet sein, erhält der Sender der zu übertragenden Nachricht, vorliegend also das mobile Endgerät 1, von der Nachrichtenvermittlungseinrichtung (message broker) 2 eine entsprechende Nachricht beziehungsweise Mitteilung über die Nichtübertragbarkeit der Nachricht an den Nachrichtenempfänger, also das mobile Endgerät 3. Eine entsprechende Mitteilung beziehungsweise Nachricht von der Nachrichtenvermittlungseinrichtung (message broker) 2 an den Nachrichtensender, also das mobile Endgerät 1, ist in den Fig. 1 und 2 nicht explizit dargestellt.

Nach der beziehungsweise den Überprüfungen seitens der Nachrichtenvermittlungseinrichtung (message broker) 2 sendet diese eine Anfrage nach einer Adressierungsinformation eines Speicherbereichs seitens der Speichereinrichtung 5 an die Speicherverwaltungseinrichtung (storage manager) 4. Das Senden einer entsprechenden Anfrage von der Nachrichtenvermittlungseinrichtung (message broker) 2 an die Speicherverwaltungseinrichtung (storage manager) 4 ist durch den mit dem Bezugszeichen 7 versehenen Pfeil symbolisch dargestellt.

Seitens der Speicherverwaltungseinrichtung (storage manager) 4 eine Adressierungsinformation eines Speicherbereichs der Speichereinrichtung 5 aufgrund der Anfrage 7 ermittelt. Die ermittelte Adressierungsinformation des Speicherbereichs der Speichereinrichtung 5 wird daraufhin der Nachrichtenvermittlungseinrichtung (message broker) 2 durch Senden einer entsprechenden die Adressierungsinformation aufweisenden Nachricht übermittelt. Das Senden der Adressierungsinformation des Speicherbereichs von der Speicherverwaltungseinrichtung (storage manager) des Mobilfunknetzes an die Nachrichtenvermittlungseinrichtung (message broker) 2 des Mobilfunknetzes ist durch den mit Bezugsziffer 8 versehenen Pfeil dargestellt.

Die von der Nachrichtenvermittlungseinrichtung (message broker) 2 von der Speicherverwaltungseinrichtung (storage manager) 4 eingeholte Adressierungsinformation eines freien Speicherbereichs seitens der Speichereinrichtung 5 wird nach deren Empfang von der Nachrichtenvermittlungseinrichtung (message broker) 2 über das Mobilfunknetz an das mobile Endgerät 1 gesendet. Das Senden der Adressierungsinformation des Speicherbereichs 5 von der Nachrichtenvermittlungseinrichtung (message broker) 2 des Mobilfunknetzes an das in dem Mobilfunknetz betreibbare Mobilfunknetz 1 ist durch den mit Bezugsziffer 9 gekennzeichneten Pfeil dargestellt.

Nach Empfang der Adressierungsinformation eines freien Speicherbereichs seitens der Speichereinrichtung (Datenbank) 5 sendet das mobile Endgerät 1 die Inhaltsinformationen (body; payload) der von dem mobilen Endgerät 1 an das mobile Endgerät 3 zu übertragenden Nachricht unter Nutzung der Adressierungsinformation an die Speicherverwaltungseinrichtung (storage manager) 4, welche die empfangenden Inhaltsinformationen (body; payload) der Nachricht (message) seitens des entsprechend adressierten Speicherbereichs der Speichereinrichtung (Datenbank) 5 speichert. Das Senden der Inhaltsinformation (body; payload) der Nachricht (message) unter Nutzung der Adressierungsinformation des von der Nachrichtenvermittlungseinrichtung (message broker) 2 unter Nutzung der Adressierungsinformation des Speicherbereichs seitens der Speichereinrichtung (Datenbank) 5 der Speicherverwaltungseinrichtung (storage manager) 4 des Mobilfunknetzes an die Speicherverwaltungseinrichtung (storage manager) 4 des Mobilfunknetzes und das entsprechende Speichern der Inhaltsinformationen (body, payload) der Nachricht (message) seitens der Speichereinrichtung (Datenbank) 5 ist durch den mit Bezugsziffer 10 versehenen Pfeil dargestellt.

Die Speicherverwaltungseinrichtung (storage manager) 4 des Mobilfunknetzes sendet nach Empfang und Speicherung der Inhaltsinformationen (body, payload) der Nachricht (message) von dem mobilen Endgerät 1 eine den vollständigen Empfang der Inhaltsinformationen (body; payload) der Nachricht (message) anzeigende Indikationsnachricht an die Nachrichtenvermittlungseinrichtung (message broker) 2. Das Senden der Indikationsnachricht von der Speicherverwaltungseinrichtung (storage manager) 4 an die Nachrichtenvermittlungseinrichtung (message broker) 2 ist durch den mit Bezugsziffer 11 versehenen Pfeil dargestellt. Bei dem in Fig. 1 dargestellten Ausführungsbeispiel sendet die Nachrichtenvermittlungseinrichtung (message broker) 2 daraufhin die Hüllinformationen (envelope) der Nachricht (message) an die Speicherverwaltungseinrichtung (storage manager) 4. Das Senden der Hüllinformationen (envelope) der Nachricht (message) ist in Fig. 1 durch den mit Bezugsziffer 12 versehenen Pfeil dargestellt.

Seitens der Speicherverwaltungseinrichtung (storage manager) 4 werden die von der Nachrichtenvermittlungseinrichtung (message broker) 2 empfangenden Hüllinformationen (envelope) der Nachricht (message) mit den seitens der Speichereinrichtung (Datenbank) 5 gespeicherten Inhaltsinformationen (body, payload) der Nachricht (message) kombiniert. Die so kombinierte Nachricht (message) wird daraufhin an den Nachrichtenempfänger, vorliegend das mobile Endgerät 3, gesendet. Das Senden der kombinierten Nachricht (message) an den Nachrichtenempfänger ist in Fig. 1 durch den mit Bezugsziffer 13 versehenen Pfeil dargestellt.

Bei dem in Fig. 2 dargestellten Ausführungsbeispiel einer erfindungsgemäßen Nachrichtenübertragung sendet die Nachrichtenvermittlungseinrichtung (message broker) 2 die Hüllinformationen (envelope) der Nachricht (message) an den wenigstens einen Nachrichtenempfänger, vorliegend das mobile Endgerät 3. Das Senden der Hüllinformationen von der Nachrichtenvermittlungseinrichtung (message broker) 2 an das mobile Endgerät ist in Fig. 2 durch den mit Bezugsziffer 14 gekennzeichneten Pfeil dargestellt. Die dabei von der Nachrichtenvermittlungseinrichtung (message broker) 2 an das mobile Endgerät 3 gesendeten Hüllinformationen (envelope) der Nachricht (message) umfassen dabei die Adressierungsinformation des Speicherbereichs seitens der Speichereinrichtung (Datenbank) 5, unter welchem die Inhaltsinformationen (body; payload) der Nachricht (message) seitens der Speicherverwaltungseinrichtung (storage manager) 4 erfasst beziehungsweise gespeichert sind. Die Adressierungsinformation kann dabei Bestandteil der Hüllinformationen sein oder aber separat zu diesen mit der Sendung 14 der Hüllinformationen an das mobile Endgerät 3 gesendet werden. Das mobile Endgerät 3 holt sich daraufhin unter Nutzung der Adressierungsinformationen aus der Speichereinrichtung 5 der Speicherverwaltungseinrichtung 4 die Inhaltsinformationen (body; payload) der Nachricht (message). Dieser Vorgang ist in Fig. 2 durch die mit der Bezugsziffer 15 beziehungsweise der Bezugsziffer 16 gekennzeichneten Pfeile dargestellt.

Bei dem Ausführungsbeispiel einer erfindungsgemäßen Nachrichtenübertragung gemäß Fig. 2 obliegt es zum einen dem Nachrichtenempfänger, vorliegend also dem mobilen Endgerät 3 beziehungsweise dessen Nutzer, ob dieses die von dem mobilen Endgerät 1 an dieses übertragene Nachricht (message) empfangen will oder nicht. Will der Nachrichtenempfänger, vorliegend also das mobile Endgerät 3, die Nachricht (message) dessen Nachrichtensenders, vorliegend also dem mobilen Endgerät 1 nicht erhalten, so kann der Nutzer des mobilen Endgerätes 3 aktiv darüber entscheiden, ob er sich die Inhaltsinformationen von der Speicherverwaltungseinrichtung (storage manager) 4 holt oder nicht. Hinzu kommt, dass die Speicherverwaltungseinrichtung (storage manager) 4 bei dem Ausführungsbeispiel gemäß Fig. 2 nicht zusätzlich ausgebildet sein muss, die Hüllinformationen (envelope) der Nachricht (message) mit den Inhaltsinformationen (body; payload) in der Nachricht zu kombinieren. Hierdurch kann die Speicherverwaltungseinrichtung (storage manager) 4 einfacher ausgebildet werden, insbesondere gegenüber der Ausführungsform gemäß Fig. 1, welche in der Lage sein muss, die Hüllinformationen (envelope) der Nachricht (message) mit den Inhaltsinformationen (body; payload) der Nachricht (message) zu kombinieren.

Die in den Fig. der Zeichnung dargestellten Ausführungsbeispiele der Erfindung dienen lediglich der Erläuterung der Erfindung und sind für diese nicht beschränkend.

### Bezugszeichenliste:

- 1: mobiles Endgerät/Mobilfunktelefon/Nachrichtensender
- 2: Nachrichtenverwaltungseinrichtung/message broker
- 3: mobiles Endgerät/Mobilfunktelefon/Nachrichtenempfänger
- 4: Speicherverwaltungseinrichtung/storage manager
- 5: Speichereinrichtung/Datenbank
- 6: Sendung Hüllinformationen (envelope) einer Nachricht (message)
- 7: Anfrage nach einer Adressierungsinformation
- 8: Sendung einer Adressierungsinformation
- 9: Senden einer Adressierungsinformation
- 10: Sendung Inhaltsinformationen (body; payload) einer Nachricht (message)
- 11: Senden einer Indikationsnachricht bezüglich den vollständigen Empfang der Inhaltsinformationen (body; payload) einer Nachricht (message)
- 12: Senden der Hüllinformationen (envelope) einer Nachricht (message)
- 13: Senden Nachricht (message)
- 14: Senden der Hüllinformationen (envelope) einer Nachricht (message) und Adressierungsinformationen eines Speicherbereichs der Speichereinrichtung (5)
- 15: Abruf Inhaltsinformationen (body; payload) einer Nachricht (message)
- 16: Senden Inhaltsinformationen (body; payload) einer Nachricht (message)
- S: Luftschnittstelle Mobilfunknetz

## Patentansprüche

1. Verfahren zur Übertragung von Nachrichten in einem Telekommunikationsnetz, wobei eine Hüllinformationen und Inhaltsinformationen aufweisende Nachricht von einem in dem Telekommunikationsnetz betreibbaren Endgerät (1) über das Telekommunikationsnetz an wenigstens einen über das Telekommunikationsnetz erreichbaren Nachrichtenempfänger (3) übertragen wird,
**gekennzeichnet durch,**
die folgenden seitens einer Nachrichtenvermittlungseinrichtung (2) des Telekommunikationsnetzes durchgeführten Verfahrensschritte:
a) Empfang der Hüllinformationen der Nachricht in der Nachrichtenvermittlungseinrichtung (2) des Telekommunikationsnetzes,
b) Bestimmung wenigstens einer Adressierungsinformation des wenigstens einen Nachrichtenempfängers seitens der Nachrichtenvermittlungseinrichtung (2) des Telekommunikationsnetzes anhand der empfangenen Hüllinformationen der Nachricht,
c) Einholen einer Adressierungsinformation eines Speicherbereichs einer Speicherverwaltungseinrichtung (4) des Telekommunikationsnetzes von der Nachrichtenvermittlungseinrichtung (2) des Telekommunikationsnetzes seitens der Speicherverwaltungseinrichtung (4) des Telekommunikationsnetzes,
d) Mitteilen der eingeholten Adressierungsinformation des Speicherbereichs der Speicherverwaltungseinrichtung (4) des Telekommunikationsnetzes von der Nachrichtenvermittlungseinrichtung (2) des Telekommunikationsnetzes an das Endgerät und
e) Senden der Hüllinformationen der Nachricht von der Nachrichtenvermittlungseinrichtung (2) des Telekommunikationsnetzes.

2. Verfahren nach Anspruch 1, **dadurch gekennzeichnet, dass** in Verfahrensschritt e) die Hüllinformationen an die Speicherverwaltungseinrichtung (4) des Telekommunikationsnetzes gesendet werden.

3. Verfahren nach Anspruch 1, **dadurch gekennzeichnet, dass** in Verfahrensschritt e) die Hüllinformationen an den Nachrichtenempfänger gesendet werden.

4. Verfahren nach einem der Ansprüche 1 bis 3, **gekennzeichnet durch** wenigstens eine Überprüfung einer Berechtigung des Senders der Nachricht zur Nutzung eines Dienstes des Telekommunikationsnetzes zur Übertragung der Nachricht.

5. Verfahren zur Übertragung von Nachrichten in einem Telekommunikationsnetz, wobei eine Hüllinformationen und Inhaltsinformationen aufweisende Nachricht von einem in dem Telekommunikationsnetz betreibbaren Endgerät (1) über das Telekommunikationsnetz an wenigstens einen über das Telekommunikationsnetz erreichbaren Nachrichtenempfänger (3) übertragen wird,
**gekennzeichnet durch,**
die folgenden seitens des in dem Telekommunikationsnetz betreibbaren Endgerätes (1) durchgeführten Verfahrensschritte:
a) Aufspalten der Nachricht in die Hüllinformationen und die Inhaltsinformationen,
b) Senden der Hüllinformationen der Nachricht,
c) Empfang einer Adressierungsinformation eines Speicherbereichs einer Speicherverwaltungseinrichtung (4) des Telekommunikationsnetzes und
d) Senden der Inhaltsinformationen der Nachricht unter Nutzung der Adressierungsinformation des Speicherbereichs der Speicherverwaltungseinrichtung (4) des Telekommunikationsnetzes an die Speicherverwaltungseinrichtung (4) des Telekommunikationsnetzes.

6. Verfahren zur Übertragung von Nachrichten in einem Telekommunikationsnetz, wobei eine Hüllinformationen und Inhaltsinformationen aufweisende Nachricht von einem in dem Telekommunikationsnetz betreibbaren Endgerät (1) über das Telekommunikationsnetz an wenigstens einen über das Telekommunikationsnetz erreichbaren Nachrichtenempfänger (3) übertragen wird,
**gekennzeichnet durch,**
die folgenden seitens einer Speicherverwaltungseinrichtung (4) des Telekommunikationsnetzes durchgeführten Verfahrensschritte:
a) Empfang einer Anfrage nach einer Adressierungsinformation eines Speicherbereichs zum Speichern von Inhaltsinformationen der Nachricht,
b) Bestimmen einer Adressierungsinformation eines Speicherbereichs zum Speichern von Inhaltsinformationen der Nachricht,
c) Senden der Adressierungsinformation an den Anfragenden,
d) Empfangen der Inhaltsinformationen der Nachricht zur Speicherung in dem Speicherbereich,
e) Senden einer den vollständigen Empfang der Inhaltsinformationen der Nachricht anzeigenden Indikationsnachricht an eine Nachrichtenvermittlungseinrichtung (2),
f) Empfangen von Hüllinformationen der Nachricht,
g) Kombinieren der Hüllinformationen der Nachricht mit den Inhaltsinformationen der Nachricht und
h) Senden der kombinierten Informationen der Nachricht an den Nachrichtenempfänger.

7. Verfahren nach Anspruch 6, **gekennzeichnet durch** die folgenden zusätzlichen Verfahrensschritte:
f oder i) Empfangen einer Inhaltsinformationsanforderungsnachricht und
g oder j) Senden der Inhaltsinformationen der Nachricht an den Nachrichtenempfänger.

8. Verfahren nach einem der Ansprüche 1 bis 7, **dadurch gekennzeichnet, dass** die Speicherverwaltungseinrichtung (4) des Telekommunikationsnetzes der Nachrichtenvermittlungseinrichtung (2) des Telekommunikationsnetzes den Erhalt der Inhaltsinformationen der Nachricht von dem Endgerät mitteilt und das Verfahren erst mit und/oder nach Erhalt dieser Mitteilung fortgeführt wird.

9. Verfahren nach einem der Ansprüche 1 bis 8, **dadurch gekennzeichnet, dass** der wenigstens eine Nachrichtenempfänger ein in dem Telekommunikationsnetz betreibbares Endgerät (3) ist.

10. Verfahren nach einem der Ansprüche 1 bis 9, **gekennzeichnet durch** die Nutzung von Nachrichten dialogorientierter Nachrichtendienste.

11. Verfahren nach einem der Ansprüche 1 bis 10, **gekennzeichnet durch** die Nutzung von Nachrichten verzögerter Nachrichtendienste, vorzugsweise SMS und/oder MMS.

12. Verfahren nach einem der Ansprüche 1 bis 11, **dadurch gekennzeichnet, dass** Telekommunikationsnetz ein Mobilfunknetz und das Endgerät (1) ein in dem Mobilfunknetz betreibbares mobiles Endgerät (1) ist.

13. Verfahren nach einem der Ansprüche 1 bis 12, **dadurch gekennzeichnet, dass** die Adressierungsinformation des Nachrichtenempfängers eine Mobilfunkrufnummer und/oder eine Internetadresse ist.

14. Verfahren nach einem der Ansprüche 1 bis 10, **dadurch gekennzeichnet, dass** dieses in einem Mobilfunknetz gemäß dem GSM- und/oder dem UMTS-Funknetzstandard ausgeführt wird.

15. Mobilfunksystem mit ein zellulares Mobilfunknetz ausbildenden Einrichtungen und darin betreibbaren mobilen Endgeräten (1, 3), **dadurch gekennzeichnet, dass** wenigstens eine der das Mobilfunknetz ausbildenden Einrichtungen eine Nachrichtenvermittlungseinrichtung (2) des Mobilfunknetzes ist, welche zur Ausführung eines Verfahrens nach einem der Ansprüche 1 bis 4 ausgebildet ist, wenigstens eine weitere Einrichtung eine Speicherverwaltungseinrichtung (4) des Mobilfunknetzes ist, welche zur Ausführung eines Verfahrens nach einem der Ansprüche 6 bis 14 ausgebildet ist und wenigstens eines der in dem Mobilfunknetz betreibbaren mobilen Endgeräte (1, 3) zur Ausführung eines Verfahrens nach dem Anspruch 5 ausgebildet ist.

## Claims

1. A method for the transmission of messages in a telecommunication network, wherein a message comprising mantle information and content information will be transmitted from a terminal (1), that is operable in the telecommunication network, via the telecommunication network to at least one message receiver (3) which is reachable via the telecommunication network,
**characterized by**
the following process steps carried out by a message transmission device (2) of the telecommunication network:
a) receiving the mantle information of the message in the message transmission device (2) of the telecommunication network,
b) determining at least one addressing information item of the at least one message receiver by means of the message transmission device (2) of the telecommunication network on the base of the received mantle information of the message,
c) retrieving an addressing information item of a storage area of a storage management device (4) of the telecommunication network by the message transmission device (2) of the telecommunication network by means of the storage management device (4) of the telecommunication network,
d) sending information about the retrieved addressing information item of the storage area of a storage management device (4) of the telecommunication network from the message transmission device (2) of the telecommunication network to the terminal and
e) sending the mantle information of the message from the message transmission device (2) of the telecommunication network.

2. A method according to claim 1, **characterized in that** in the process step e) the mantle information is sent to the storage management device (4) of the telecommunication network.

3. A method according to claim 1, **characterized in that** in the process step e) the mantle information is sent to the message receiver.

4. A method according to one of the claims 1 to 3, **characterized by** at least one verification of an authorization of the sender of the message to use a service of the telecommunication network for transmitting the message.

5. A method for the transmission of messages in a telecommunication network, wherein a message comprising mantle information and content information will be transmitted from a terminal (1), that is operable in the telecommunication network, via the telecommunication network to at least one message receiver (3) which is reachable via the telecommunication network,
**characterized by**
the following process steps carried out by the terminal (1) that is operable in the telecommunication network:
a) splitting the message into the mantle information and the content information,
b) sending the mantle information of the message,
c) receiving an addressing information item of a storage area of a storage management device (4) of the telecommunication network and
d) sending the content information of the message to the storage management device (4) of the telecommunication network using the addressing information item of the storage area of the storage management device (4) of the telecommunication network.

6. A method for the transmission of messages in a telecommunication network, wherein a message comprising mantle information and content information will be transmitted from a terminal (1), that is operable in the telecommunication network, via the telecommunication network to at least one message receiver (3) which is reachable via the telecommunication network,
**characterized by**
the following process steps carried out by a storage management device (4) of the telecommunication network:
a) receiving a request for an addressing information item of a storage area for storing content information of the message,
b) determining an addressing information item of a storage area for storing content information of the message,
c) sending the addressing information item to the inquirer,
d) receiving the content information of the message for storing it in the storage area,
e) sending an indication message which indicates the complete reception of the content information of the message to a message transmission device (2),
f) receiving mantle information of the message,
g) combining the mantle information of the message with the content information of the message and
h) sending the combined information of the message to the message receiver.

7. A method according to claim 6, **characterized by** the following additional process steps:
f) or i) receiving a request message for content information and
g) or j) sending the content information of the message to the message receiver.

8. A method according to one of the claims 1 to 7, **characterized in that** the storage management device (4) of the telecommunication network of the message transmission device (2) of the telecommunication network informs about the receipt of the content information of the message from the terminal and the method is only continued upon and/or after receipt of this message.

9. A method according to one of the claims 1 to 8, **characterized in that** the at least one message receiver is a terminal (3) that can be operated in the telecommunication network.

10. A method according to one of the claims 1 to 9, **characterized by** the use of messages of dialogue-oriented message services.

11. A method according to one of the claims 1 to 10, **characterized by** the use of messages of delayed message services, preferably SMS and/or MMS.

12. A method according to one of the claims 1 to 11, **characterized in that** the telecommunication network is a mobile radio network and the terminal (1) is a mobile terminal (1) that can be operated in the mobile radio network.

13. A method according to one of the claims 1 to 12, **characterized in that** the addressing information item of the message receiver is a mobile telephone number and/or an internet address.

14. A method according to one of the claims 1 to 10, **characterized in that** this one will be carried out in a mobile radio network according to the GSM and/or UMTS radio network standard.

15. A mobile radio system comprising devices which form a cellular mobile radio network and mobile terminals (1, 3) that can be operated in this one, **characterized in that** at least one of the devices which form the mobile radio network is a message transmission device (2) of the mobile radio network, which message transmission device is adapted for carrying out a method according to one of the claims 1 to 4, at least one further device is a storage management device (4) of the mobile radio network, which storage management device is configured for carrying out a method according to one of the claims 6 to 14 and at least one of the mobile terminals which can be operated in the mobile radio network is configured for carrying out a method according to claim 5.

## Revendications

1. Procédé de transmission de messages dans un réseau de télécommunication, dans lequel un message comprenant des informations d'enveloppe et des informations de contenu est transmis par un terminal (1) utilisable dans le réseau de télécommunication via le réseau de télécommunication à au moins un récepteur de message (3), qui est accessible via le réseau de télécommunication,
**caractérisé par**
les étapes de procédé suivantes exécutées par un dispositif de transmission de messages (2) du réseau de télécommunication :
a) recevoir les informations d'enveloppe du message dans le dispositif de transmission de messages (2) du réseau de télécommunication,
b) déterminer au moins une information d'adressage de l'au moins un récepteur de message par le dispositif de transmission de messages (2) du réseau de télécommunication sur la base des informations d'enveloppe du message reçues,
c) récupérer une information d'adressage d'une zone de mémoire d'un dispositif de gestion de mémoire (4) du réseau de télécommunication par le dispositif de transmission de messages (2) du réseau de télécommunication par moyen du dispositif de gestion de mémoire (4) du réseau de télécommunication,
d) envoyer une information sur l'information d'adressage récupérée de la zone de mémoire du dispositif de gestion de mémoire (4) du réseau de télécommunication par le dispositif de transmission de messages (2) du réseau de télécommunication au terminal et
e) envoyer l'information d'enveloppe du message par le dispositif de transmission de messages (2) du réseau de télécommunication.

2. Procédé selon la revendication 1, **caractérisé en ce que** dans l'étape e) les informations d'enveloppe sont envoyées au dispositif de gestion de mémoire (4) du réseau de télécommunication.

3. Procédé selon la revendication 1, **caractérisé en ce que** dans l'étape e) les informations d'enveloppe sont envoyées au récepteur de message.

4. Procédé selon l'une des revendications 1 à 3, **caractérisé par** au moins une vérification d'une autorisation de l'émetteur du message concernant l'utilisation d'un service du réseau de télécommunication pour transmettre le message.

5. Procédé de transmission de messages dans un réseau de télécommunication, dans lequel un message comprenant des informations d'enveloppe et des informations de contenu est transmis par un terminal (1) utilisable dans le réseau de télécommunication via le réseau de télécommunication à au moins un récepteur de message (3), qui est accessible via le réseau de télécommunication,
**caractérisé par**
les étapes de procédé suivantes exécutées par le terminal (1) utilisable dans le réseau de télécommunication :
a) diviser le message en les informations d'enveloppe et les informations de contenu,
b) envoyer les informations d'enveloppe du message,
c) recevoir une information d'adressage d'une zone de mémoire d'un dispositif de gestion de mémoire (4) du réseau de télécommunication et
d) envoyer les informations de contenu du message au dispositif de gestion de mémoire (4) du réseau de télécommunication en utilisant l'information d'adressage de la zone de mémoire du dispositif de gestion de mémoire (4) du réseau de télécommunication.

6. Procédé de transmission de messages dans un réseau de télécommunication, dans lequel un message comprenant des informations d'enveloppe et des informations de contenu est transmis par un terminal (1) utilisable dans le réseau de télécommunication via le réseau de télécommunication à au moins un récepteur de message (3), qui est accessible via le réseau de télécommunication,
**caractérisé par**
les étapes de procédé suivantes exécutées par un dispositif de gestion de mémoire (4) du réseau de télécommunication :
a) recevoir une demande d'une information d'adressage d'une zone de mémoire pour mémoriser des informations de contenu du message,
b) déterminer une information d'adressage d'une zone de mémoire pour mémoriser des informations de contenu du message,
c) envoyer l'information d'adressage au demandeur,
d) recevoir les informations de contenu du message pour les mémoriser dans la zone de mémoire,
e) envoyer un message d'indication, qui indique la réception complète des informations de contenu du message, à un dispositif de transmission de messages (2),
f) recevoir des informations d'enveloppe du message,
g) combiner les informations d'enveloppe du message et les informations de contenu du message et
h) envoyer les informations combinées du message au récepteur de message.

7. Procédé selon la revendication 6, **caractérisé par** les étapes de procédé supplémentaires suivantes de:
f) ou i) recevoir un message de demande d'informations de contenu et
g) ou j) envoyer les informations de contenu du message au récepteur de message.

8. Procédé selon l'une des revendications 1 à 7, **caractérisé en ce que** le dispositif de gestion de mémoire (4) du réseau de télécommunication du dispositif de transmission de messages (2) du réseau de télécommunication communique la réception des informations de contenu du message du terminal et le procédé n'est continué qu'avec et/ou après la réception de ce message.

9. Procédé selon l'une des revendications 1 à 8, **caractérisé en ce que** l'au moins un récepteur de message est un terminal (3) utilisable dans le réseau de télécommunication.

10. Procédé selon l'une des revendications 1 à 9, **caractérisé par** l'utilisation de messages des services de messages orientées au dialogue.

11. Procédé selon l'une des revendications 1 à 10, **caractérisé par** l'utilisation de messages des services de messages retardés, de préférence des SMS et/ou des MMS.

12. Procédé selon l'une des revendications 1 à 11, **caractérisé en ce que** le réseau de télécommunication est un réseau radio mobile et le terminal (1) est un terminal mobile (1) utilisable dans le réseau radio mobile.

13. Procédé selon l'une des revendications 1 à 12, **caractérisé en ce que** l'information d'adressage du récepteur de message est un numéro de portable et/ou une adresse Internet.

14. Procédé selon l'une des revendications 1 à 10, **caractérisé en ce que** celui-ci est exécuté dans un réseau radio mobile selon le standard radio mobile GSM et/ou UMTS.

15. Système radio mobile comprenant des dispositifs, qui forment un réseau radio mobile cellulaire, et des terminaux mobiles (1, 3) utilisables dans celui-ci, **caractérisé en ce qu'**au moins un des dispositifs, qui forment le réseau radio mobile, est un dispositif de transmission de messages (2) du réseau radio mobile, lequel dispositif de transmission de messages est adapté à exécuter un procédé selon l'une des revendications 1 à 4, au moins un autre dispositif est un dispositif de gestion de mémoire (4) du réseau radio mobile, lequel dispositif de gestion de mémoire est conçu pour exécuter un procédé selon l'une des revendications 6 à 14 et au moins un des terminaux mobiles (1, 3) utilisables dans le réseau radio mobile est conçu pour exécuter un procédé selon la revendication 5.
